# EUROPEAN PATENT APPLICATION

(11) **EP 4 773 661 A1**
(43) Date of publication of application: **08.07.2026**
(21) Application number: 24886314.4
(22) Date of filing: 31.10.2024
(51) Int. Cl.: H04W 24/08, H04W 24/10, H04L 65/1016, H04L 65/1023, H04L 65/1069, H04L 65/65

(54) **METHOD AND APPARATUS FOR PROVIDING IMS DATA CHANNEL-BASED SERVICE EXPERIENCE IN WIRELESS COMMUNICATION SYSTEM**

(30) Priority: 02.11.2023 KR 20230150210
(71) Applicant: Samsung Electronics Co., Ltd., Suwon-si, Gyeonggi-do 16677 (KR)
(72) Inventor: KIM, Dongyeon, Suwon-si Gyeonggi-do 16677 (KR); BAE, Jaehyeon, Suwon-si Gyeonggi-do 16677 (KR); LEE, Hoyeon, Suwon-si Gyeonggi-do 16677 (KR)
(74) Representative: Nederlandsch Octrooibureau
(86) International application number: PCT/KR2024/016953
(87) International publication number: WO 2025/095642

(57) **Abstract**

The present disclosure relates to a 5G or 6G communication system for supporting a higher data transmission rate. According to various embodiments of the present disclosure, a method performed by a data channel (DC) application server (AS) entity in a mobile communication system may comprise the steps of: transmitting, to an internet protocol (IP) multimedia subsystem (IMS) application server (AS) entity, a first message for subscribing to an event associated with DC interworking of a multimedia telephony service for IMS (MTSI) user equipment (UE); receiving, from the IMS AS entity, a second message for notifying the DC interworking for a DC MTSI UE; and transmitting, to the MTSI UE, information for accessing a DC AS.

## Description

### [Technical Field]

The disclosure relates to a wireless communication system and, more specifically, to a method and an apparatus for providing an IMS data channel-based service experience.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

In order to satisfy the increasing demand for wireless data traffic, which has been on the rise since the commercialization of the 4G communication system, efforts have been made to develop an improved 5G communication system or a pre-5G communication system. For this reason, the 5G communication system or the pre-5G communication system is referred to as a communication system after a 4G network (Beyond 4G Network) or a system after an LTE system (Post LTE). The 5G communication system defined by the 3GPP is called a New Radio (NR) system.

In order to achieve a high data transmission rate, implementation of the 5G communication system in an ultra-high frequency (mmWave) band (for example, a band such as a 60 giga (60 GHz) band) is being considered. In order to mitigate path loss of radio waves in the ultra-high frequency band and increase a propagation transmission distance of radio waves, technologies such as beamforming, massive multiple input multiple output (massive MIMO), full dimensional multiple input multiple output (Full Dimensional MIMO: FD-MIMO), an array antenna, analog beamforming, and a large scale antenna have been discussed in the 5G communication system and applied to the NR system.

In addition, in order to improve a network of the system, technologies such as an evolved small cell, an advanced small cell, a cloud radio access network (cloud radio access network: cloud RAN), an ultra-dense network, device-to-device communication (Device to Device communication: D2D), a wireless backhaul, a moving network, cooperative communication, CoMP (Coordinated Multi-Points), and interference cancellation have been developed in the 5G communication system.

In addition, in the 5G system, FQAM (Hybrid FSK and QAM Modulation) and SWSC (Sliding Window Superposition Coding), which are advanced coding modulation (Advanced Coding Modulation: ACM) schemes, and FBMC (Filter Bank Multi Carrier), NOMA (non-orthogonal multiple access), and SCMA (sparse code multiple access), which are advanced access technologies, have been developed.

Meanwhile, the Internet is evolving from a human-centered connection network in which humans generate and consume information into an IoT (Internet of Things) network in which distributed components such as objects exchange and process information with each other. IoE (Internet of Everything) technology, in which big data processing technology through connection with cloud servers and the like is combined with IoT technology, is also emerging. In order to implement IoT, technological elements such as sensing technology, wired/wireless communication and network infrastructure, service interface technology, and security technology are required, and recently technologies such as a sensor network for connection between objects, machine-to-machine (Machine to Machine, M2M) communication, and machine type communication (MTC) have been researched. In an IoT environment, intelligent IT (Internet Technology) services capable of creating new value for human life may be provided by collecting and analyzing data generated from connected objects. IoT may be applied to fields such as a smart home, a smart building, a smart city, a smart car or a connected car, a smart grid, health care, smart home appliances, and advanced medical services through convergence and combination between existing IT (Information Technology) technology and various industries.

Accordingly, various attempts have been made to apply the 5G communication system to an IoT network. For example, 5G communication such as a sensor network, machine-to-machine (Machine to Machine, M2M) communication, and machine type communication (MTC) is implemented by techniques such as beamforming, MIMO, and an array antenna. Application of a cloud radio access network (cloud RAN) as the big data processing technology described above may also be regarded as an example of convergence of 5G technology and IoT technology.

### [Disclosure of Invention]

### [Technical Problem]

The disclosure relates to a wireless communication system and, more specifically, to a method and an apparatus for providing an Internet protocol (IP) multimedia subsystem (IMS) data channel-based service experience. Specifically, embodiments of the disclosure propose various methods for performing connection based on an IMS data channel.

In the conventional IMS data channel-based multimedia call, whether the states and conditions of a UE and a 5G network are states and conditions in which an IMS data channel-based multimedia call can be provided may be identified during a call setup procedure, and if the conditions are not satisfied, a call is not set up or, after the call is set up, the conditions are monitored, and if the conditions are not satisfied, the call is terminated.

Currently, in the 3GPP, there is an emerging requirement that, for the IMS data channel-based multimedia call service under discussion, the service needs to be provided without restrictions between a user using a UE that does not support an IMS data channel and a user using a UE that supports an IMS data channel.

Therefore, there is a need for a method of connecting to a server for providing a UE which does not support an IMS data channel with an IMS data channel-based service in an indirect manner without using the IMS data channel directly, thereby providing an IMS data channel-based service experience.

Various embodiments of the disclosure are to provide an apparatus and a method capable of effectively providing services in a wireless communication system.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

According to various embodiments of the disclosure, a method performed by a user equipment (UE) in a wireless communication system may include receiving a configuration message from a base station, measuring a channel, based on the configuration message, and transmitting a result of the measurement to the base station.

Various embodiments of the disclosure propose a session setup procedure for an IMS data channel and an IMS session, which can provide an IMS data channel-based service experience by providing a method for connecting to a server for providing a UE which does not support an IMS data channel with an IMS data channel-based service in an indirect manner without using the IMS data channel directly.

### [Advantageous Effects of Invention]

The disclosure provides an apparatus and a method capable of effectively providing services in a wireless communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates an architecture of a 5G system according to an embodiment of the disclosure;
FIG. 2 illustrates an Internet protocol (IP) multimedia subsystem (IMS) network structure according to embodiments of the disclosure.
FIGS. 3A and 3B illustrate a structure of a network including a data channel server in a wireless communication system according to embodiments of the disclosure.
FIG. 4 illustrates a network structure including a connection between a core network and an IMS network in a wireless communication system according to embodiments of the disclosure.
FIG. 5 illustrates a flow of signals for providing an IMS data channel service experience in a wireless communication system according to embodiments of the disclosure.
FIGS. 6A and 6B illustrate another flow of signals for providing an IMS data channel service experience in a wireless communication system according to embodiments of the disclosure.
FIGS. 7A and 7B illustrate another signal flow for providing an IMS data channel service experience in a wireless communication system according to embodiments of the disclosure.
FIG. 8 illustrates a structure of a UE according to various embodiments of the disclosure.
FIG. 9 illustrates a structure of a base station according to various embodiments of the disclosure.

### [Mode for the Invention]

Hereinafter, the operation principle of the disclosure will be described in detail in conjunction with the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The present embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in the 3rd generation partnership project long term evolution (3GPP LTE) and 3GPP 5G standards will be used for the sake of descriptive convenience. However, the disclosure is not limited by these terms and names, and may be applied in the same way to systems that conform other standards.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help an understanding of the disclosure and the disclosure is not limited to configurations or arrangements illustrated in the drawings of the disclosure.

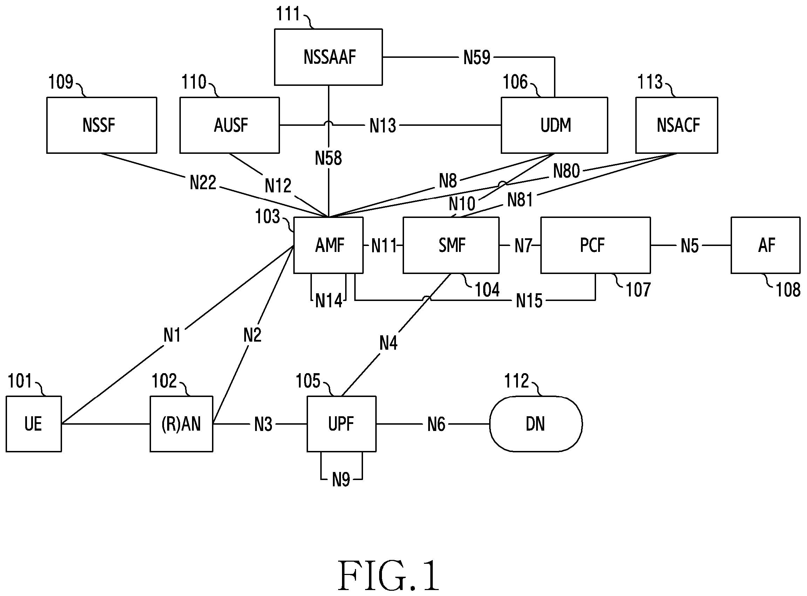

FIG. 1 illustrates an architecture of a 5G system according to an embodiment of the disclosure;
Referring to FIG. 1, the 5G system architecture may include various elements (e.g., network functions, NFs). As some of them, FIG. 1 illustrates an authentication server function (AUSF) device 110, a (core) access and mobility management function (AMF) device 103, a session management function (SMF) device 104, a policy control function (PCF) device 107, an application function (AF) device 108, a unified data management (UDM) device 106, a data network (DN) 112, a user plane function (UPF) device 105, a (radio) access network (R)AN) 102, and a terminal (e.g., a user equipment (UE)) 101. Also, FIG. 1 illustrates a network slicing selection function (NSSF) device 109 and a network slice specific authentication and authorization function (NSSAAF) device 111,

Each of the devices illustrated in FIG. 1 may be implemented as a single server or device, and may also be implemented as a network slice instance. In case that each of the devices is implemented as a network slice instance, it may be implemented as two or more identical or different network slice instances in a single server or device, and may also be implemented as a single network slice instance in two or more servers or devices.

The respective NFs may support the following functions.
- The ASUF 110 may process and store data for authentication of the UE.
- The AMF 103 may provide a function for access and mobility management on a per-UE basis, and basically, one UE may be connected to one AMF. Specifically, the AMF 103 may support functions, such as inter-core network (CN) node signaling for mobility between 3GPP access networks, termination of a radio access network (RAN) CP interface (e.g., N2 interface), termination of NAS signaling (N1), NAS signaling security (NAS ciphering and integrity protection), AS security control, registration management (registration area management), connection management, idle mode UE reachability (e.g., including control and execution of paging retransmission), mobility management control (subscription and policy), intra-system mobility and inter-system mobility support, support for network slicing, SMF selection, lawful intercept (LI) (e.g., for an AMF event and an interface to an LI system), delivery of a session management (SM) message between the UE and the SMF, a transparent proxy for routing an SM message, access authentication, access authorization including roaming permission checking, delivery of an SMS message between the UE and a short message service function (SMSF), a security anchor function (SAF), and/or security context management (SCM). Some or all of the functions of the AMF 103 may be supported within a single instance operating as one AMF.
- The DN 112 may refer to, for example, an operator service, Internet access, a 3rd-party service, or the like. The DN 112 may transmit a downlink protocol data unit (PDU) to the UPF 105 or receive a PDU, transmitted from the UE 101, via the UPF 105.
- The PCF 107 may receive information on packet flows from an application server, and provide a function of determining policies, such as mobility management and session management. Specifically, the PCF 107 may support functions, such as supporting a unified policy framework for controlling network operations, providing policy rules so as to allow control plane function(s) (e.g., AMF, SMF, etc.) to enforce the policy rules, and implementing a front end for accessing relevant subscription information for policy decisions in a user data repository (UDR).
- The SMF 104 may provide a session management function, and if the UE has multiple sessions, may be managed by a different SMF for each session. Specifically, the SMF 104 may support functions, such as session management (e.g., session establishment, modification, and release including maintenance of a tunnel between the UPF and an AN node), UE IP address assignment and management (optionally including authentication), selection and control of a UP function, configuration of traffic steering for routing traffic to an appropriate destination from the UPF, termination of an interface toward policy control functions, execution of a control part of a quality of service (QoS) and a policy, lawful interception (for an SM event and an interface to an LI system), termination of an SM part of an NAS message, downlink data notification, an initiator of AN-specific SM information (transferred to the AN through N2 via the AMF), determination of an SSC mode of a session, and a roaming function. As described above, some or all of the functions of the SMF 104 may be supported within a single instance operating as one SMF.
- The UDM 106 may store a user's subscription data, policy data, and the like. The UDM 106 may include two parts, that is, an application front end (FE) (not illustrated) and a user data repository (UDR) (not illustrated).
- The FE may include a UDM FE responsible for location management, subscription management, credential processing, and the like, and a PCF-FE responsible for policy control. The UDR may store data required for the functions provided by the UDM-FE and policy profiles required by the PCF. The data stored in the UDR may include policy data and user subscription data, including subscription identifiers, security credentials, access and mobility related subscription data, and session-related subscription data. The UDM-FE may support functions, such as access to subscription information stored in the UDR, authentication credential processing, user identification handling, access authentication, registration/mobility management, subscription management, and SMS management.

The UPF 105 may deliver downlink PDUs, received from the DN 112, to the UE 101 via the (R)AN 102, and may deliver uplink PDUs, received from the UE 101, to the DN 112 via the (R)AN 102. Specifically, the UPF 105 may support functions, such as an anchor point for intra-/inter-RAT mobility, an external PDU session point for interconnection to a data network, packet routing and forwarding, a user plane part of packet inspection and policy rule enforcement, lawful intercept, and traffic usage reporting, an uplink classifier for supporting routing of traffic flows to the data network, a branching point for supporting multi-homed PDU sessions, QoS handling (e.g., packet filtering, gating, and uplink/downlink rate enforcement) for a user plane, uplink traffic verification (SDF mapping between a service data flow (SDF) and a QoS flow), transport-level packet marking within an uplink and downlink, downlink packet buffering, and downlink data notification triggering. Some or all of the functions of the UPF 105 may be supported within a single instance operating as one UPF.
- The AF 108 may interwork with a 3GPP core network in order to provide services (e.g., support such functions as an application influence on traffic routing, access to network capability exposure, and interworking with a policy framework for policy control).
- The (R)AN 102 may generally refer to new radio access networks that support both evolved E-UTRA, which is an evolved version of 4G radio access technology, and new radio (NR) technology (e.g., gNB).
- The gNode B (gNB) may refer to a base station. The base station may include the term "RAN", "transmission reception point (TRP)", or the like. The gNB may support functions, such as radio resource management functions (e.g., radio bearer control, radio admission control, connection mobility control, dynamic allocation of resources to UEs in an uplink/downlink (i.e., scheduling)), Internet protocol (IP) header compression, encryption and integrity protection of user data streams, selection of the AMF 103 during attachment of the UE 101 in a case where routing to the AMF 103 is not determined from information provided to the UE 101, routing of user plane data to the UPF(s) 105, routing of control plane information to the AMF 103, connection setup and release, scheduling and transmission of paging messages (originating from the AMF), scheduling and transmission of system broadcast information (originating from the AMF or operating and maintenance (O&M), measurement and measurement reporting configuration for mobility and scheduling, transport level packet marking in an uplink, session management, support for network slicing, QoS flow management and mapping to data radio bearers, support for UEs in an inactive mode, NAS message distribution functions, NAS node selection functions, radio access network sharing, dual connectivity, and tight interworking between NR and E-UTRA.
- The UE 101 may refer to a user equipment. The user equipment may be referred to as such terms as "terminal", "mobile equipment (ME)", or "mobile station (MS)". In addition, the user equipment may be a portable device, such as a notebook, a mobile phone, a personal digital assistant (PDA), a smartphone, or a multimedia device, or may also be a non-portable device, such as a personal computer (PC) or a vehicle-mounted device. In the following description, it will be referred to as a user equipment (UE) or a terminal.

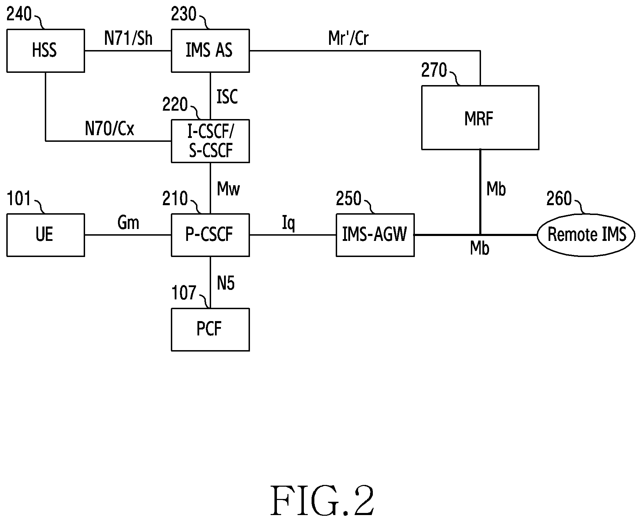

According to an embodiment, for the clarity of the description, a network exposure function (NEF) device and an NF repository function (NRF) are not illustrated in FIG. 1, but all the NFs illustrated in FIGS. 2 to 5 to be described below may interwork with the NEF and the NRF, as necessary. Specifically, the NRF (not illustrated in FIG. 1) may support a service discovery function. Upon receiving a second NF discovery request from a first NF instance, the NRF may perform a second NF discovery operation and then provide information on the discovered second NF instance to the first NF instance. In addition, the NRF may maintain available NF instances and services supported thereby.

Although FIG. 1 illustrates a reference model for a case where the UE accesses one DN by using one PDU session for the sake of descriptive convenience, the disclosure is not limited thereto.

According to an embodiment, the UE 101 may concurrently access two (i.e., local and central) data networks by using multiple PDU sessions. In this case, two SMFs may be selected for different PDU sessions. However, each SMF may have capability to control both the local UPF and central UPF in the PDU session.

In addition, the UE 101 may concurrently access two (i.e., local and central) data networks provided in a single PDU session.

According to an embodiment, control plane components of 5GC may be considered virtualized network functions (VNFs), and communication between the VNFs may be considered providing services by one VNF to other VNFs via RESTful-based API exchange. An interface for API-based communication between the VNFs may be referred to as a service based interface (SBI).

In 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a data network
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the following descriptions, a UE may refer to the UE 101, and the term "UE" or "terminal" may be used interchangeably. In this case, unless specifically defined additionally, a UE should be understood as the UE 101.

The UE access data networks (e.g., networks providing Internet services) via the 5G system to establish a session, and may distinguish between the respective data networks by using identifiers called a data network name (DNN) The DNN may be used to determine NFs related to a user plane, inter-NF interfaces, operator policies, etc. when the UE 101 connects a session to a network system. The DNN may be used, for example, to select an SMF and UPF(s) for a PDU session, and may be used to select interface(s) (e.g., N6 interface) between the data network and the UPF for the PDU session. In addition, the DNN may be used to determine a mobile communication operator's policy to be applied to the PDU session.

FIG. 2 illustrates an Internet protocol (IP) multimedia subsystem (IMS) network structure according to embodiments of the disclosure. According to an embodiment, reference will be made to the contents of FIG. 1, and a redundant description may be omitted.

Referring to FIG. 2, a user equipment (UE) 101 may communicate with another UE (not illustrated) located in a remote IMS network 260 and an IP multimedia core network (IM CN) subsystem component via the IM CN subsystem. The IM CN subsystem may include a P-CSCF 210, an I/S-CSCF 220, an IMS AS 230, an IMS HSS 240, an IMS AGW 250, and/or an MRF 270, and the above-described components may perform the following functions.
- Proxy call session control function (P-CSCF) 210: A P-CSCF may perform a first contact point function for the UE to access the IMS.
- Interrogating/serving CSCF (I/S-CSCF) 220: An I-CSCF may perform a contact point function for a subscriber of a network operator or a roaming user located in a service area of the network operator. According to an embodiment, the S-CSCF may respond to an actual user session state of a network.
- IMS application server (AS) 230: An IMS AS may provide and execute an Internet multimedia (IM) value-added service. According to an embodiment, in addition, the IMS AS may affect a session initiation protocol (SIP) session by providing a service supported in the operator network on behalf thereof.
- IMS home subscriber server (HSS) 240: An IMS HSS may perform a role of a database for storing information on a user.
- IMS-access gateway (AGW) 250: An IMS-AGW is located in a media transmission path, and may manage a network address associated with an inbound and output media streams.
- Media resource function (MRF) 270: An MRF may perform various processing operations related to a media stream. According to an embodiment, the MRF may be divided into a multimedia resource function controller (MRFC) which is responsible for control and a multimedia resource function processor (MRFP) which is responsible for media processing.

Referring to FIG. 2, interfaces between the above-described components may be represented by the following reference points.
- Gm: Reference point Gm may support communication between the UE and the IM CN subsystem. For example, the UE may request network registration and session control through the Gm reference point. According to an embodiment, a SIP to be described below may be used for the Gm reference point.
- Mw: Reference point Mw may support signaling message exchange and transmission between CSCFs.
- ISC: Reference point ISC may support exchange of information necessary for a service provided by a service platform (e.g., IMS AS) between the S-CSCF and a service platform.
- Sh: Reference point Sh may support exchange of information necessary for a service provided by a service platform (e.g., an IMS AS) between the HSS and the service platform.
- Cx: Reference point Cx may support information transmission between the HSS and the CSCF.
- Mr'/Cr: Reference point Mr' may support interaction for session control between the IMS AS and the MRFC. Reference point Cr may support interaction for media control between the IMS AS and the MRFC.
- Iq: Reference point Iq may support exchange of information necessary for allocation and release of a transport address between the P-CSCF and the IMS AGW.
- Mb: reference point Mb may support IMS media transport between IMS components.

Referring to FIG. 2, a P-CSCF 210 supporting a service-based interface (SBI) may communicate with a policy control function (PCF) 107, and this may be referred to as reference point N5. According to an embodiment, the PCF 107 may support policy establishment and deployment for managing network operations. According to an embodiment, the P-CSCF 210 that supports an SBI may be regarded as an application function (AF) that uses a service provided by the PCF 107 to another VNF.

According to an embodiment, the HSS 240 that supports the SBI may communicate with the I/S-CSCF 220 that supports the SBI via reference point N70, and may communicate with the IMS AS 230 that supports the SBI via reference point N71. Similarly, the I/S-CSCF 220 that supports the SBI and the IMS AS 230 that supports the SBI may be considered as an AF using a service provided by the HSS 240 supporting the SBI. According to an embodiment, the functions provided by reference points N70 and N71 may be equivalent to the functions provided by reference point Cx and reference point Sh, respectively.

According to an embodiment, the SIP may refer to an application layer signaling protocol that specifies procedures for intelligent terminals desiring to communicate on the Internet to identify each other, find the locations thereof, and generate or delete/change a multimedia communication session therebetween. According to an embodiment, the SIP is a request/response structure for controlling generation, modification, and termination of multimedia service sessions, such as Internet-based meetings, calls, voice mails, event notifications, and instant messaging, and may be applied to both a transmission control protocol (TCP) and a user datagram protocol (UDP). In addition, the SIP may use an SIP uniform resource locator (URL) similar to an e-mail address to distinguish each user so that the user can be provided with the service without being dependent on the IP address. According to an embodiment, the SIP is a text-based protocol developed by reusing a large part of a hypertext transfer protocol (HTTP) and a simple mail transfer protocol (SMTP), is thus easy to implement, and may have flexibility and scalability to generate various services by being combined with many other protocols used in the Internet. The SIP is a simpler protocol corresponding to H.323 of ITU-T, a revision operation has been performed by a separate ITEF SIP working group after proposal as RFC 2543 by an IETF multiparty multimedia session control (MMUSIC) working group in 1999, and the RFC 3261 standard has been established in July 2002.

In order to provide a service (e.g., a real-time interactive service) in a communication according to various embodiments of the disclosure, an agreement on a media session that constitutes the service is required between UEs participating in the service. A communication system according to various embodiments of the disclosure may perform an agreement on a media session through a session description protocol (SDP) negotiation to provide a service (e.g., a real-time interactive service).

According to an embodiment, the SDP may be included in the SIP message. The SDP may include an ASCII sentence-based protocol for describing multimedia sessions and related scheduling information. The SDP is used to transfer information on a media stream of a multimedia session so that a user can join a session. A multimedia session may be defined as a set of media streams over a duration thereof, and the period during which the session is in progress need not be continuous. A session based on multicast on the Internet may have two purposes including a means for notifying of the existence and time of the session, and a means for delivering information for joining the session, and in a unicast environment, the latter may be the purpose of the session. According to an embodiment, the SDP information may include, for example, a session name and purpose, a session duration, session configuration media, media receiving information, and the like.

Hereinafter, various embodiments of the disclosure are described under the premise that a service provided in a communication system is a real-time interactive service, but the disclosure is not limited thereto.

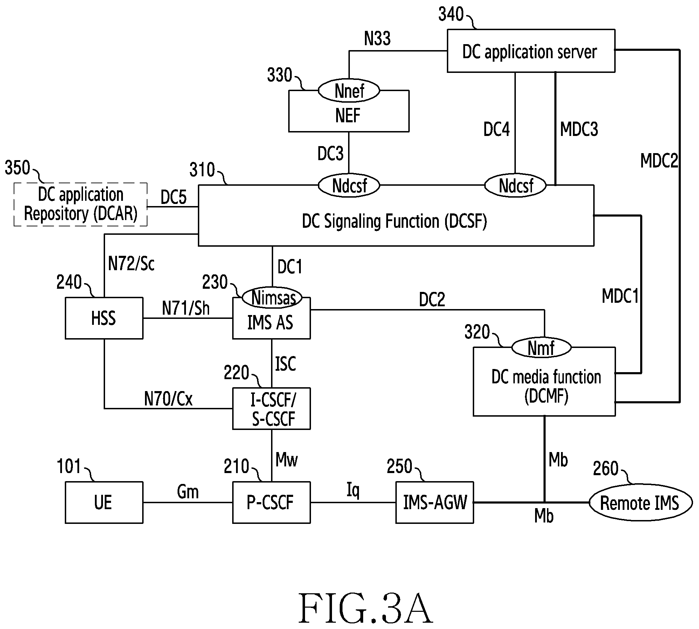

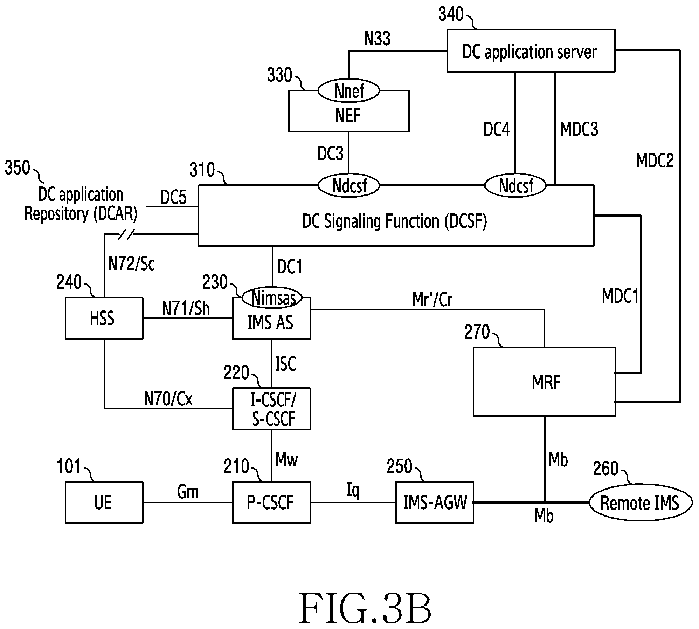

FIGS. 3A and 3B illustrate a structure of a network including a data channel server in a wireless communication system according to embodiments of the disclosure. Reference is made to the contents of FIGS. 1 and 2, and a redundant description may be omitted.

In a communication system according to various embodiments of the disclosure, a web application for providing a service (e.g., a real-time interactive service) may be provided by a data channel application server (DCAS). According to an embodiment, the data channel application server may be located (for example, included) in an IMS service provider network or a 3^{rd} party network. In the disclosure, a web application provided by the data channel application server may be referred to as a data channel application (DCA). According to an embodiment, a UE participating in a service (e.g., a real-time interactive service) provided by the data channel application may exchange data required for the service with another UE participating in the same service by using a data channel (DC), directly or via an intermediate node, and may communicate with the data channel application server via a bootstrap data channel (BDC).

Referring to FIG. 3A and FIG. 3B, a communication system may include a UE 101 and an IM CN subsystem. According to an embodiment, the UE 101 may communicate with other UEs located in a remote IMS network 260 and components of the IM CN subsystem through the IM CN subsystem. According to an embodiment, the IM CN subsystem may include at least one of a P-CSCF 210, an I/S-CSCF 220, an IMS AS 230, an IMS HSS 240, an IMS AGW 250, a data channel signaling function 310, a media function 321, an NEF 330, a data channel application server 340, or a data channel application repository 350.

According to an embodiment, the above-described data channel signaling function 310 may perform the following functions.
- Management and control of data channel including bootstrap data channel
- Data channel management and event generation/reception through communication with IMS AS
- Management and distribution control of data channel application
- Communication with 5G network function (NF) for providing data channel application service
- Proxy role for distribution of resources of data channel application server 340

According to an embodiment, the above-described data application storage 350 may store and manage the data channel application, and may be located inside or outside the data channel server 340.

According to an embodiment, the above-described media function 321 or MRF 270 may perform the following functions.
- Management and control of media resources to be transmitted through data channel including bootstrap data channel
- Proxy role for data exchange between endpoint of data channel connected to UE and another endpoint

According to an embodiment, the above-described media function 321 or MRF 270 may provide equivalent functions through different interfaces, and in consideration of compatibility with other network equipment and user terminals, only one of the media function 321 and the MRF 270 may be included in the data channel server 340, or both may be included together in the data channel server 340.

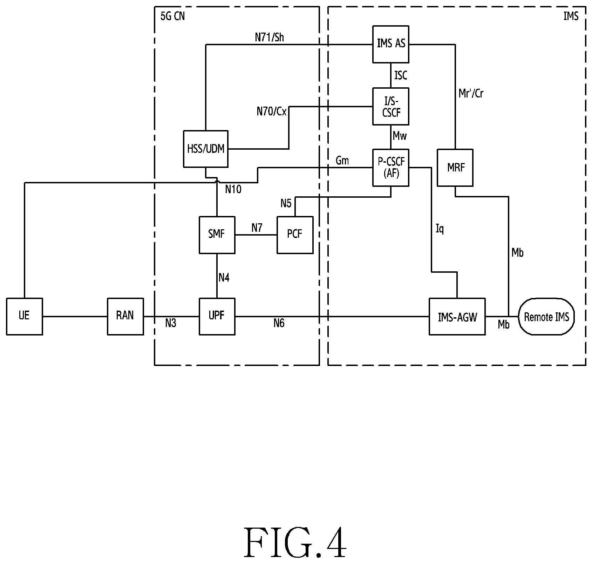

FIG. 4 illustrates a network structure including a connection between a core network and an IMS network in a wireless communication system according to embodiments of the disclosure. Reference is made to the contents of FIGS. 1 to 3, and a redundant description may be omitted.

According to an embodiment, in order to establish an IMS session for making an IMS call, the UE may transmit an SIP INVITE message to the P-CSCF. Thereafter, an IMS session may be established through communication between a P-CSCF, an S-CSCF, an I-CSCF, an IMS AS, and an HSS in accordance with an IMS session establishment procedure.

According to an embodiment, in case of a structure in which an IMS call of a UE passes through a 5G system (e.g., a structure in which data is transmitted through a 5G PDU session), the PCF may be responsible for PDU session policy management including data resource management among the UE, RAN, UPF, and IMS-AGW. To this end, the P-CSCF may provide the PCF with IMS session information necessary for data resource management of the IMS session. In this case, the P-CSCF may operate as an AF for the PCF and may use an N5 interface.

According to an embodiment, the PCF may perform, based on the IMS session information, management of UE policy or session policy, including determining policy information (policy information) including data resource reservation and determination of a quality of service (QoS) rule, and generating a policy control request trigger (PCRT). The PCF may establish or identify a PDU session associated/corresponding to the IMS session, based on IMS session information.

For example, when the UE successfully establishes an IMS call, (1) an IMS session is established between IMS nodes, (2) a PDU session is established between 5G CN NFs, and the association between (1) the IMS session and (2) the PDU session may be identified by the PCF, based on the IMS session information provided by the P-CSCF to the PCF.

According to an embodiment, in a case where an IMS call of the UE goes through a 4G system (e.g., a structure in which data is transmitted through an evolved packet system (EPS) PDN session), the role of the PCF described above may be performed by a PCRF.

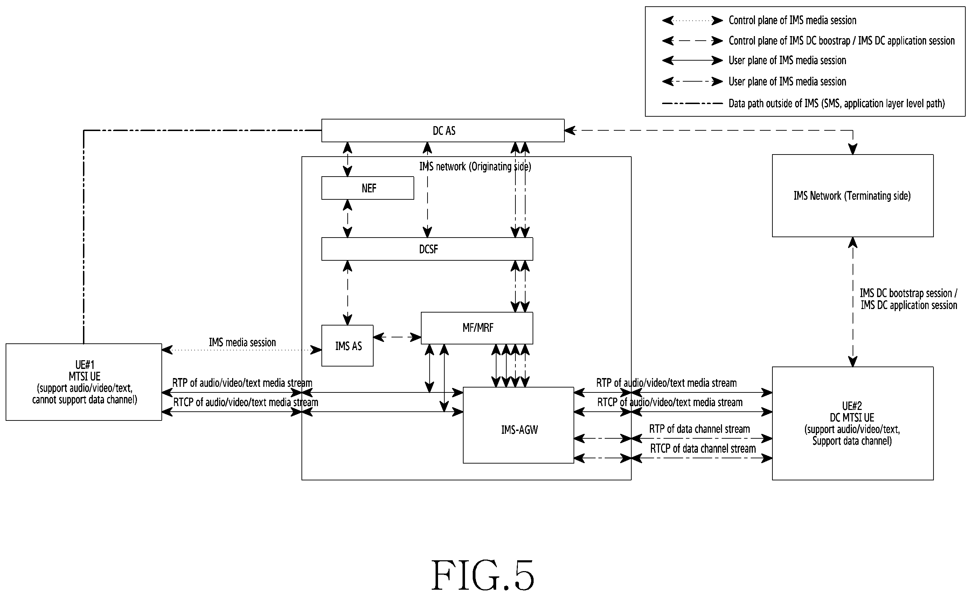

FIG. 5 illustrates a flow of signals for providing an IMS data channel service experience in a wireless communication system according to embodiments of the disclosure. According to various embodiments, the IMS data channel service experience may be replaced by terms having substantially the same meaning, such as IMS data communication (DC), an IMS service, and/or an IMS DC service.

Referring to FIG. 5, according to an embodiment, UE#1 may be a UE (a multimedia telephony service for IMS (MTSI) UE) which does not support data transmission through an IMS data channel, and may refer to a UE only supporting data transmission through a multimedia telephony (MMTel) session. UE#1 may request, from the IMS network, an IMS call for transmitting a media stream using at least one of audio, video, or text. The IMS network (e.g., an IMS AS) may provide an IMS media session (e.g., an MMTel session) to UE#1, and may transmit/receive a media stream using at least one of audio, video, or text through a real-time transport protocol (RTP) or real-time transport control protocol (RTCP) connection, via the IMS-AGW, to/from UE#2.

The IMS network may provide a service identical or similar to a service that may be provided to a UE (e.g., an MTSI UE) that does not support data transmission through an IMS data channel, according to a user of a service or a UE, who is a subscriber of a service. In this case, the IMS network (e.g., the IMS AS) may determine whether the corresponding UE (e.g., the MTSI UE) is a UE capable of receiving a service experience of the IMS data channel, and may establish an IMS DC session (e.g., an IMS DC bootstrap session or an IMS DC application session) between entities inside the IMS network or the IMS network and a UE (e.g., a DC MTSI UE) that supports an IMS data channel and corresponds to a counterpart of a call, so as to transmit and receive control signals. Accordingly, an IMS DC session may be established among the DC AS, the NEF, the DCSF, the IMS AS, and the MF/MRF (e.g., inside the IMS network), or between the DC AS, the IMS network (e.g., including the NEF, the DCSF, the IMS AS, and the MF/MRF) of the counterpart UE (UE#2), and the counterpart UE (UE#2), so that a control signal may be transmitted and received.

According to an embodiment, UE#1 may transmit and receive data of the service provided by the DC service from the DC AS through a data path (e.g., the Internet through a UE web browser or SMS) outside the IMS. According to an embodiment, UE#2 may transmit and receive data of a service provided by the DC service from the DC AS through at least one of the IMS network on the UE#1 side and the IMS network on the UE#2 side. According to an embodiment, UE#1 may communicate with the DC AS through an IMS external path, and information input and output to and from UE#1 may be delivered to UE#2 through an IMS DC user plane path of the UE#1-side IMS network.

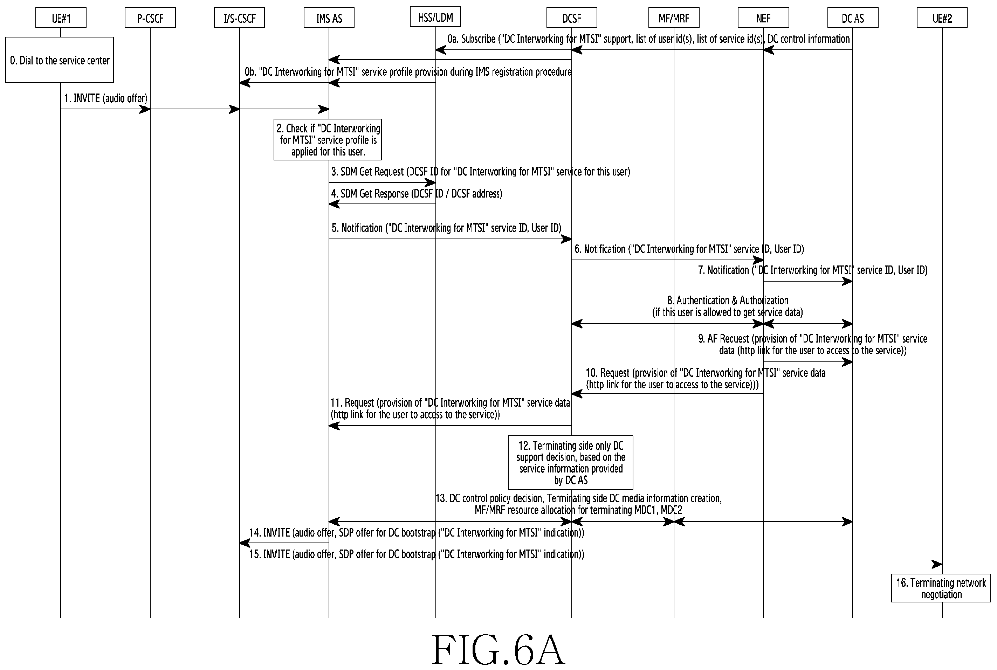

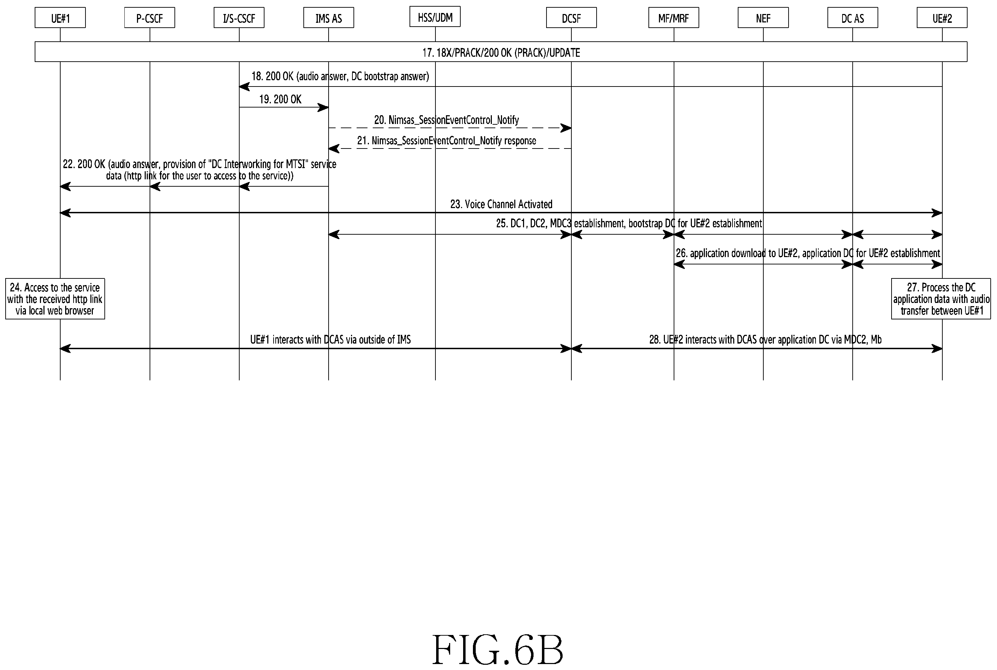

FIGS. 6A and 6B illustrate another flow of signals for providing an IMS data channel service experience in a wireless communication system according to embodiments of the disclosure. According to various embodiments, the IMS data channel service experience may be replaced with terms having substantially the same meaning, such as IMS DC, an IMS service, or an IMS DC service.

Various embodiments of the disclosure may include at least one of all, some, or a combination of some of the operations in FIGS. 6A and 6B, and an operation may not be an essential operation, as long as it substantially exhibits the same technical effect even when the operation is omitted.

FIGS. 6A and 6B illustrate an example of a method of providing an IMS DC service experience to a UE that does not support DC in a communication system according to various embodiments of the disclosure.

Referring to FIGS. 6A and 6B, a UE and a network may establish an IMS session and an IMS DC session for using an IMS DC service experience through the following procedures.

In operation 0, UE#1 may receive, from a user, a request for making a call to a service center phone number that provides an IMS DC service. According to an embodiment, a DC application server (AS) providing an IMS DC service may perform the following event subscription procedures 0a to 0b in advance so that when the user makes a call to the IMS DC service center phone number, an IMS AS may notify the DC AS of the same.

In operation 0a, the DC AS may provide, to the DCSF via the NEF, at least one of "information (hereinafter, described as "DC interworking for MTSI" support, but not limited to this term) indicating that interworking for providing a DC service experience to the MTSI UE (e.g., the UE that does not support DC) can be supported," "a list of user identifiers(s) (IDs) for which interworking is supported," "a list of service ID(s) for which interworking is supported," or "DC control information." When an event related to interworking provision for a service or user included in at least one of the list of user IDs for which interworking is supported and the list of service IDs for which interworking is supported occurs, the DC AS may request to subscribe to a notification of the event. According to an embodiment, the DCSF may provide information(s) received from the DC AS through the NEF to the HSS/UDM or provide the same to the IMS AS. When an event related to interworking provision for a service or a user included in at least one of the list of user IDs for which interworking is supported and the list of service IDs for which interworking is supported occurs, the DCSF may request to subscribe to a notification of the event.

In operation 0b, when there is a request for at least one of a service profile for a service included in the list received in operation 0a and user subscriber information for a user included in the list during an IMS registration procedure, the HSS/UDM may provide "information for informing the DCSF whether interworking for providing a DC service experience to the MTSI UE (e.g., the UE not supporting DC) is supported" to the IMS AS or S-CSCF.

In operation 1, UE#1 may transmit an SIP INVITE request to the IMS AS via a P-CSCF and an S-CSCF in an originating network. The request transmitted by UE#1 may include an initial SDP, which may include a request for audio (e.g., an audio call).

In operation 2, the IMS AS may check whether a service profile "DC interworking for MTSI" received in operation 0b is applicable to the UE#1 call request in operation 1. For example, the IMS AS may determine, based on a called ID (e.g., a telephone number of UE#2, i.e., which may be a telephone number of a service center), and a calling ID (e.g., a telephone number of UE#1) included in the SIP INVITE, that a "DC interworking for MTSI" service profile is applicable when the called ID or the calling ID is included in the lists in operations 0a to 0b. Furthermore, the IMS AS may determine whether the IMS AS is able to trigger or initiate a "procedure for providing a DC service experience to UE#1" to the DCSF or DC AS even though UE#1 has not requested an IMS DC session.

When it is determined in operation 2 that the "procedure for providing a DC service experience to UE#1" can be initiated, the IMS AS may search for a DCSF in charge of a DC interworking service in operation 3. Referring to FIG. 6A, the IMS may request a DCSF ID stored in subscriber information from the HSS/UDM. For example, the IMS AS may request the ID of the DCSF in charge of DC interworking, the ID being stored in subscriber information of a current user (UE#1 user) by using an SDM Get Request message. According to an embodiment, the above information may be information stored upon operation 0a.

In operation 4, the HSS/UDM may provide at least one of the DCSF ID or a DCSF address to the IMS AS according to the request in operation 3. According to an embodiment, operations 3 and 4 may be performed by the NRF instead of the HSS/UDM.

In operation 5, the IMS AS may notify the DCSF found in operation 4 of the occurrence of an event related to a DC interworking service, based on the determination in operation 2. For example, the notification message transmitted by the IMS AS may include at least one of a service ID or a user ID corresponding to the DC interworking service. According to an embodiment, the service ID and the user ID may include an ID included in the lists included in operation 0a.

In operation 6, the DCSF may identify that the event related to the DC interworking service has occurred, based on the notification message received in operation 5. Therefore, the DCSF may provide a notification message to the NEF in order to notify the same to the DC AS having requested the subscription.

In operation 7, the NEF may transfer the message of operation 6 to the DC AS.

In operation 8, the DC AS may perform an authentication or authorization procedure to determine at least one of "whether the DCSF having transmitted the messages in operations 6 to 7 is a DCSF which allows to receive information provided by the DC AS," or "whether a user corresponding to the user ID provided by the DCSF is a user allowed to receive the information provided by the DC AS."

After the authentication or authorization procedure in operation 8 has been successfully performed, the DC AS may provide information related to a DC interworking service in operation 9. The AF may provide information related to the DC interworking service and may request to provide the same to at least one of the DCSF, the IMS AS, or UE#1. According to an embodiment, information related to DC interworking service may include service address information that allows a user to access a DC service even though UE#1 is a UE that does not support DC calls. According to an embodiment, the service address information may be an HTTP link.

In operation 10, the NEF may transfer the information related to the DC interworking service received in operation 9 to the DCSF, and may request to provide the same to the IMS AS and/or UE#1.

In operation 11, the DCSF may transfer information related to the DC interworking service, received in operation 10, to the IMS AS, and may request to provide the same to UE#1.

In operation 12, when the "information related to the DC interworking service" or a "request for providing such information to the UE or the IMS AS" is received in operation 10, the DCSF may determine, based on the information(s) received in operation 0a, whether to establish an IMS DC session for the terminating side. For example, when the DC control information of operation 0a includes the request for the DC interworking service and describes "information indicating that a general IMS session may be provided to a DC unsupported side and both an IMS session and an IMS DC session may be provided to a DC supported side," the DCSF may determine to establish an IMS DC session only for the terminating side (UE#2 side). In this case, whether the terminating side supports the IMS DC may be determined based on at least one of a called-side user ID, a service profile applied in operation 2, a list(s) provided in operations 0a to 0b, or DC control information.

When it is determined in operation 12 to establish an IMS DC session for the terminating side, the DCSF may determine a DC control policy including generating DC media information required for MDC1 or MDC2 resource allocation of the MF or the MRF for the terminating side, in operation 13. According to an embodiment, based on the above-described policy, the MF or MRF may allocate MDC1 or MDC2 resources.

In operation 14, the IMS AS may provide the SIP INVITE message of operation 1 to the terminating UE through the S-CSCF and the I-CSCF. In this case, the SIP INVITE may additionally include an SDP offer for requesting a DC bootstrap session for supporting DC interworking. An SDP offer for requesting a DC bootstrap session for supporting DC interworking may be provided when the IMS AS identifies that an IMS DC session can be established at the terminating side, based on the procedure of operations 11 to 13. For example, when receiving a "request to transfer media resource allocation information based on a DC control policy to the MF or MRF" from the DCSF in the process of operation 13, or receiving a "request for service data provision for DC interworking" from the DCSF in operation 11, the IMS AS may determine that an IMS DC session can be established at the terminating side, and propose the same to the terminating UE.

In operation 15, the SIP INVITE may be transferred to UE#2 through the I-CSCF, S-CSCF, and P-CSCF at the terminating side.

In operation 16, an SDP negotiation (e.g., an audio call or IMS DC session setup) for the terminating network and UE#2 may be performed.

Hereinafter, operations 17 to 28 according to the above operations are illustrated with reference to FIG. 6B.

In operation 17, UE#2 and the terminating network may provide the originating network with an 18X response including an SDP answer for the bootstrap DC. Based on the SDP answer, the MF or the MRF may update the data channel media resource information for UE#2.

In operation 18, UE#2 may return a 200 OK response to the I-CSCF and S-CSCF of the originating network.

In operation 19, the 200 OK response of operation 15 may be transferred to the IMS-AS.

In operation 20, the IMS AS may transmit a notification of a successful session establishment event to the DCSF. The notification transmitted by the IMS AS may be transferred using a Nimsas_SessionEventControl Notify message, and the message may include at least one of a SessionEstablishmentSuccessEvent, a session ID, or a Media Info List.

In operation 21, the DCSF may respond to the Nimsas notification request.

In operation 22, the 200 OK message may be transferred to UE#1, and this message may include a response to the audio call in operation 1. According to an embodiment, in addition, information related to the DC interworking service may be transferred, based on the request message of operation 11. Information related to DC interworking service may include "service address information enabling a user to access a DC service although UE#1 is a UE that does not support a DC call." According to an embodiment, the service address information may be an HTTP link.

In operation 23, UE#1 may conduct an audio call with UE#2.

In operation 24, UE#1 may access the service server (e.g., the DC AS) through the operation of the application layer without going through the IMS network, based on the service address information received in operation 22. For example, UE#1 may provide an audio telephone connection to a service center to the user, and may simultaneously display, through the user display, that access to the service server through a web browser is available. The user may access a web page provided by the service center by using the corresponding address. According to an embodiment, the web page may provide a service (e.g., an avatar-based customer guidance service) that the service provider was to provide through an app installed in UE#1 via an ISM DC session. Accordingly, the user may use a service similar to the IMS DC service by using a UE that does not support an IMS DC session.

In operation 25, UE#2, the IMS AS, the DCSF, the MF/MRF, and the DC AS may establish an IMS DC bootstrap session. According to an embodiment, DC1, DC2, and MDC3 resources may be allocated and the interfaces may be connected.

In operation 26, UE#2 may download the DC application through the IMS DC bootstrap session. According to an embodiment, an IMS DC application session may be subsequently established.

In operation 27, UE#2 may identify the DC application data received through the DC AS to MF and the audio data received from UE#1 in operation 23 as associated data and process the same. According to an embodiment, UE#2 may acquire or determine information on a correlation between audio data and the DC application, based on the SIP INVITE message in operation 15 and the data received from the DC AS in operation 26.

In operation 28, UE#1 may perform input or output of information to or from a service server (DC AS) through an application layer, while making an audio call with UE#2. According to an embodiment, the input/output information of UE#1 existing in the DC AS may be provided to UE#2 as IMS DC application data through MDC2 or Mb interface from at least one of the DCSF, the MF, or the MRF.

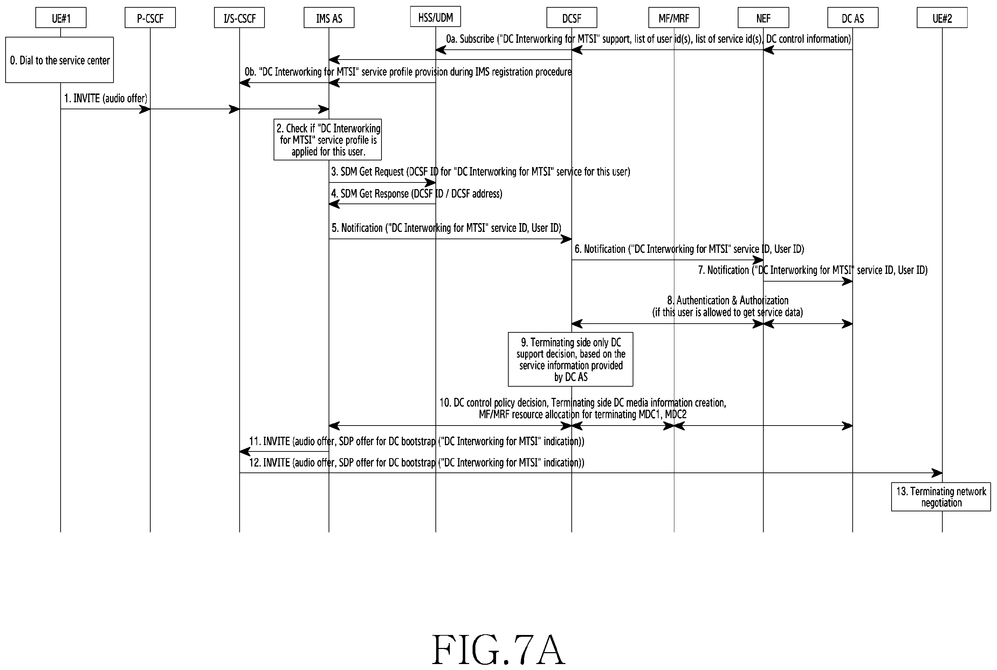

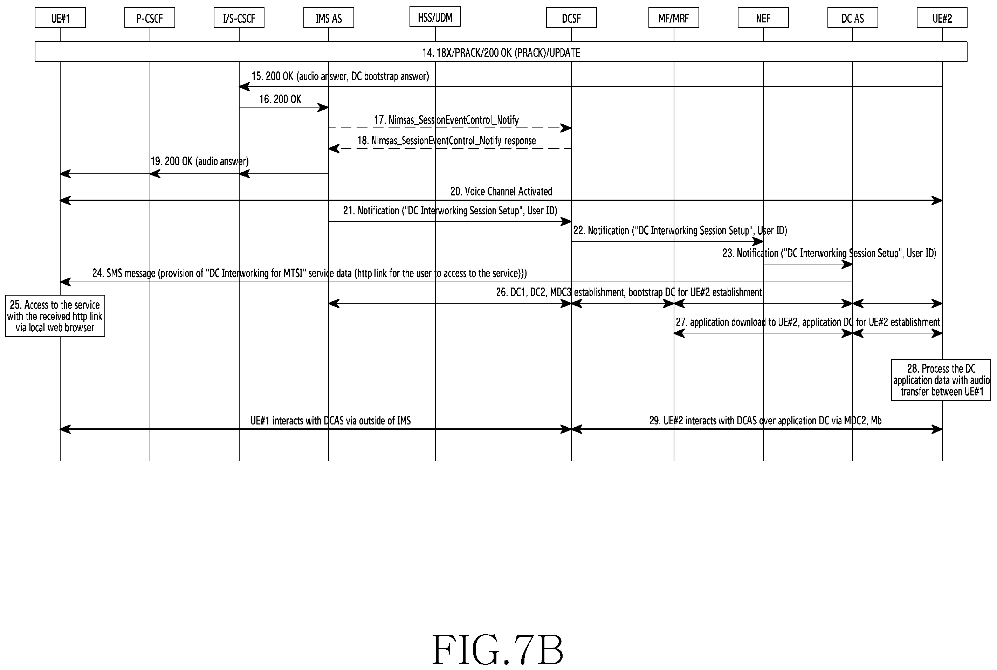

FIGS. 7A and 7B illustrate another signal flow for providing an IMS data channel service experience in a wireless communication system according to embodiments of the disclosure. According to various embodiments, an IMS data channel service experience may be replaced with terms having substantially the same meaning, such as IMS DC, an IMS service, or an IMS DC service.

Various embodiments of the disclosure may include at least one of all, some, or a combination of some of the operations in FIGS. 7A and 7B, and an operation may not be an essential operation, as long as it substantially exhibits the same technical effect even when the operation is omitted.

FIGS. 7A and 7B illustrate another example of a method of providing an IMS DC service experience to a UE that does not support DC in a communication system according to various embodiments of the disclosure.

Referring to FIGS. 7A and 7B, a UE and a network may establish an IMS session and an IMS DC session for using an IMS DC service experience through the following procedures.

In operation 0, UE#1 may receive, from a user, a request for making a call to a service center phone number that provides an IMS DC service. According to an embodiment, a DC AS providing an IMS DC service may perform the following event subscription procedures 0a to 0b in advance so that when the user makes a call to the IMS DC service center phone number, an IMS AS may notify the DC AS of the same

In operation 0a, the DC AS may provide, to the DCSF via the NEF, at least one of "information (hereinafter, described as "DC interworking for MTSI" support, but not limited to this term) indicating that interworking for providing a DC service experience to the MTSI UE (e.g., the UE that does not support DC) can be supported," "a list of user identifiers(s) (IDs) for which interworking is supported," "a list of service ID(s) for which interworking is supported," or "DC control information." When an event related to interworking provision for a service or user included in at least one of the list of user IDs for which interworking is supported and the list of service IDs for which interworking is supported occurs, the DC AS may request to subscribe to a notification of the event. According to an embodiment, the DCSF may provide information(s) received from the DC AS through the NEF to the HSS/UDM or provide the same to the IMS AS. When an event related to interworking provision for a service or a user included in at least one of the list of user IDs for which interworking is supported and the list of service IDs for which interworking is supported occurs, the DCSF may request to subscribe to a notification of the event.

In operation 0b, when there is a request for at least one of a service profile for a service included in the list received in operation 0a and user subscriber information for a user included in the list during an IMS registration procedure, the HSS/UDM may provide "information for informing the DCSF whether interworking for providing a DC service experience to the MTSI UE (e.g., the UE not supporting DC) is supported" to the IMS AS or S-CSCF.

In operation 1, UE#1 may transmit an SIP INVITE request to the IMS AS via a P-CSCF and an S-CSCF in an originating network. The request transmitted by UE#1 may include an initial SDP, which may include a request for audio (e.g., an audio call).

In operation 2, the IMS AS may check whether a service profile "DC interworking for MTSI" received in operation 0b is applicable to the UE#1 call request in operation 1. For example, the IMS AS may determine, based on a called ID (e.g., a telephone number of UE#2, i.e., which may be a telephone number of a service center), and a calling ID (e.g., a telephone number of UE#1) included in the SIP INVITE, that a "DC interworking for MTSI" service profile is applicable when the called ID or the calling ID is included in the lists in operations 0a to 0b. Furthermore, the IMS AS may determine whether the IMS AS is able to trigger or initiate a "procedure for providing a DC service experience to UE#1" to the DCSF or DC AS even though UE#1 has not requested an IMS DC session.

When it is determined in operation 2 that the "procedure for providing a DC service experience to UE#1" can be initiated, the IMS AS may search for a DCSF in charge of a DC interworking service in operation 3. Referring to FIG. 7A, the IMS may request a DCSF ID stored in subscriber information from the HSS/UDM. For example, the IMS AS may request the ID of the DCSF in charge of DC interworking, the ID being stored in subscriber information of a current user (UE#1 user) by using an SDM Get Request message. According to an embodiment, the above information may be information stored upon operation 0a.

In operation 4, the HSS/UDM may provide at least one of the DCSF ID or a DCSF address to the IMS AS according to the request in operation 3. According to an embodiment, operations 3 and 4 may be performed by the NRF instead of the HSS/UDM.

In operation 5, the IMS AS may notify the DCSF found in operation 4 of the occurrence of an event related to a DC interworking service, based on the determination in operation 2. For example, the notification message transmitted by the IMS AS may include at least one of a service ID or a user ID corresponding to the DC interworking service. According to an embodiment, the service ID and the user ID may include an ID included in the lists included in operation 0a.

In operation 6, the DCSF may identify that the event related to the DC interworking service has occurred, based on the notification message received in operation 5. Therefore, the DCSF may provide a notification message to the NEF in order to notify the same to the DC AS having requested the subscription.

In operation 7, the NEF may transfer the message of operation 6 to the DC AS.

In operation 8, the DC AS may perform an authentication or authorization procedure to determine at least one of "whether the DCSF having transmitted the messages in operations 6 to 7 is a DCSF which allows to receive information provided by the DC AS," or "whether a user corresponding to the user ID provided by the DCSF is a user allowed to receive the information provided by the DC AS."

In operation 9, when the notification of the occurrence of the event related to DC interworking service is received in operation 5, the DCSF may determine, based on the information(s) received in operation 0a, whether to establish an IMS DC session for the terminating side. For example, when the DC control information of operation 0a includes the request for the DC interworking service and describes "information indicating that a general IMS session may be provided to a DC unsupported side and both an IMS session and an IMS DC session may be provided to a DC supported side," the DCSF may determine to establish an IMS DC session only for the terminating side (UE#2 side). In this case, whether the terminating side supports the IMS DC may be determined based on at least one of a called-side user ID, a service profile applied in operation 2, a list(s) provided in operations 0a to 0b, or DC control information.

When it is determined in operation 9 to establish an IMS DC session for the terminating side, the DCSF may determine a DC control policy including generating DC media information required for MDC1 or MDC2 resource allocation of the MF or the MRF for the terminating side, in operation 10. According to an embodiment, based on the above-described policy, the MF or MRF may allocate MDC1 or MDC2 resources.

In operation 11, the IMS AS may provide the SIP INVITE message of operation 1 to the terminating UE through the S-CSCF and the I-CSCF. In this case, the SIP INVITE may additionally include an SDP offer for requesting a DC bootstrap session for supporting DC interworking. An SDP offer for requesting a DC bootstrap session for supporting DC interworking may be provided when the IMS AS identifies that an IMS DC session can be established at the terminating side, based on the procedure of operations 9 and 10. For example, when receiving a "request to transfer media resource allocation information based on a DC control policy to the MF or MRF" from the DCSF in the process of operation 10, determining that the DC interworking service profile is applicable in operation 2, or identifying the presence of the DCSF for application of the DC interworking service profile in operations 3 and 4, the IMS AS may determine that an IMS DC session can be established at the terminating side, and propose the same to the terminating UE.

In operation 12, the SIP INVITE may be transferred to UE#2 through the I-CSCF, S-CSCF, and P-CSCF at the terminating side.

In operation 13, an SDP negotiation (e.g., an audio call or IMS DC session setup) for the terminating network and UE#2 may be performed.

Hereinafter, operations 14 to 29 according to the above operations are illustrated with reference to FIG. 7B.

In operation 14, UE#2 and the terminating network may provide the originating network with an 18X response including an SDP answer for the bootstrap DC. Based on the SDP answer, the MF or the MRF may update the data channel media resource information for UE#2.

In operation 15, UE#2 may return a 200 OK response to the I-CSCF and S-CSCF of the originating network.

In operation 16, the 200 OK response of operation 15 may be transferred to the IMS-AS.

In operation 17, the IMS AS may transmit a notification of a successful session establishment event to the DCSF. The notification transmitted by the IMS AS may be transferred using a Nimsas_SessionEventControl Notify message, and the message may include at least one of a SessionEstablishmentSuccessEvent, a session ID, or a Media Info List.

In operation 18, the DCSF may respond to the Nimsas notification request.

In operation 19, the 200 OK message may be transferred to UE#1, and this message may include a response to the audio call in operation 1.

In operation 20, UE#1 may conduct an audio call with UE#2.

When the procedures of operations 16 to 18 are performed (e.g., when an IMS session for UE#1 is established), the IMS AS may determine that a session supporting DC interworking has been established, and identify whether UE#1 is ready to access the DC AS through the application layer, in operation 21. Accordingly, the IMS AS may transmit, to the DC AS, a notification message triggering or initiating to provide service address information to UE#1. The IMS AS may transmit the notification message to the DCSF, and this message may include information indicating that the session for DC interworking has been set up (e.g., at least one of "DC interworking session setup" or a user ID). In order to transmit this notification message, a subscription procedure in which the setup of a session for DC interworking is treated as an event may be performed in advance (e.g., operations 0a and 0b).

In operation 22, the DCSF may transfer the notification message of operation 21 to the NEF.

In operation 23, the NEF may transfer the notification message of operation 22 to the DC AS.

In operation 24, the DC AS may provide information related to the DC interworking service to UE#1 by using an SMS message. The DC interworking-related information provided the DC AS may include service address information enabling a user to access a DC service although UE#1 is a UE that does not support a DC call. According to an embodiment, the service address information may be an HTTP link.

In operation 25, UE#1 may access the service server (e.g., the DC AS) through the operation in the application layer without going through the IMS network, based on the service address information received in operation 24. For example, UE#1 may provide an audio telephone connection to a service center to the user, and may simultaneously display, through the user display, that access to the service server through a web browser is available. The user may access a web page provided by the service center by using the corresponding address. According to an embodiment, the web page may provide a service (e.g., an avatar-based customer guidance service) that the service provider was to provide through an app installed in UE#1 via an ISM DC session. Accordingly, the user may use a service similar to the IMS DC service by using a UE that does not support an IMS DC session.

In operation 26, UE#2, the IMS AS, the DCSF, the MF/MRF, and the DC AS may establish an IMS DC bootstrap session. According to an embodiment, DC1, DC2, and MDC3 resources may be allocated and the interfaces may be connected.

In operation 27, UE#2 may download the DC application through the IMS DC bootstrap session. According to an embodiment, an IMS DC application session may be subsequently established.

In operation 28, UE#2 may identify the DC application data received through the DC AS to MF and the audio data received from UE#1 in operation 20 as associated data and process the same. According to an embodiment, UE#2 may acquire or determine information on a correlation between audio data and the DC application, based on the SIP INVITE message in operation 12 and the data received from the DC AS in operation 27.

In operation 29, UE#1 may perform input or output of information to or from a service server (DC AS) through an application layer, while making an audio call with UE#2. According to an embodiment, the input/output information of UE#1 existing in the DC AS may be provided to UE#2 as IMS DC application data through MDC2 or Mb interface from at least one of the DCSF, the MF, or the MRF.

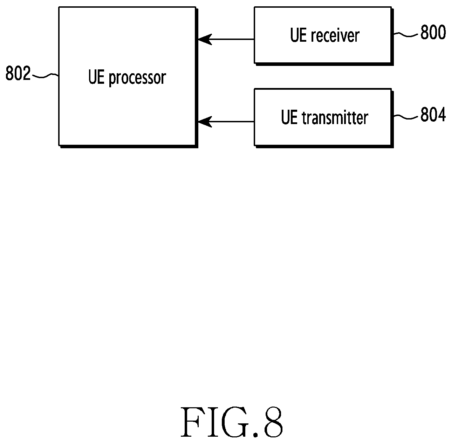

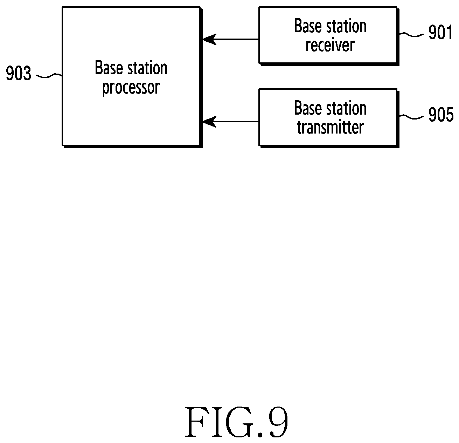

In order to perform the above-described embodiments of the disclosure, transmitters, receivers, and processors of the UE and the base station are illustrated in FIGS. 8 and 9, respectively. In the above-described embodiments, the method for performing positioning by the UE in a sidelink has been described, and in order to perform the method, each of the receivers, the processors, or the transmitters of the base station and the UE may operate according to the embodiments.

FIG. 8 illustrates a structure of a UE according to various embodiments of the disclosure. Specifically, FIG. 8 illustrates an internal structure of a UE according to an embodiment of the disclosure.

As illustrated in FIG. 8, the UE may include a receiver 800, a transmitter 804, a processor 802 (or controller), or a memory (not illustrated). In an embodiment of the disclosure, the receiver 800 and the transmitter 804 as a whole may be referred to as a transceiver. The transceiver of the UE may transmit/receive signals with the base station. The signals may include control information and data. To this end, the transceiver may include a radio frequency (RF) transmitter configured to up-convert and amplify the frequency of transmitted signals, an RF receiver configured to low-noise-amplify received signals and down-convert the frequency thereof, and the like. In addition, the transceiver may receive signals through a radio channel, output the same to the UE processor 802, and transmit signals output from the UE processor 802 through the radio channel. The UE processor 802 may control a series of processes such that the UE can operate according to the above-described embodiments.

FIG. 9 illustrates a structure of a base station according to various embodiments of the disclosure. More specifically, FIG. 9 illustrates an internal structure of a base station according to an embodiment of the disclosure.

As illustrated in FIG. 9, the base station may include a receiver 901, a transmitter 905, a processor 903 (or controller), or a memory (not illustrated). In an embodiment of the disclosure, the base station receiver 901 and the base station transmitter 905 as a whole may be referred to as a transceiver. The transceiver of the base station may be used to transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. In addition, the transceiver may receive signals through a radio channel, output the same to the base station processor 903, and transmit signals output from the base station processor 903 through the radio channel. The base station processor 903 may control a series of processes such that the base station can operate according to the above-described embodiments.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, all embodiment of the disclosure may be partially combined with each other to operate a base station and a terminal.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. Moreover, other variants based on the technical idea of the embodiments may also be implemented in various systems such as FDD LTE, TDD LTE, and 5G or NR systems.

## Claims

1. A method performed by a data channel (DC) application server (AS) entity in a mobile communication system, the method comprising:
transmitting, to an Internet protocol (IP) multimedia subsystem (IMS) application server (AS) entity, a first message for subscribing to an event associated with DC interworking of a multimedia telephony service for IMS (MTSI) user equipment (UE);
receiving, from the IMS AS entity, a second message for notifying the DC interworking for a DC MTSI UE; and
transmitting, to the MTSI UE, information for accessing a DC AS.

2. The method of claim 1,
wherein the first message comprises user identifiers (IDs) associated with the DC MTSI UE, and
wherein the second message comprises a user ID associated with the DC MTSI UE, corresponding to the DC interworking of the MTSI UE, among the user IDs associated with the DC MTSI UE.

3. The method of claim 1,
wherein the first message is transmitted through a network exposure function (NEF) entity, and
wherein the second message is received through the NEF entity.

4. The method of claim 1, wherein the information for accessing the DC AS is transmitted to the MTSI UE through the IMS AS entity.

5. A method performed by an Internet protocol (IP) multimedia subsystem (IMS) application server (AS) entity in a mobile communication system, the method comprising:
receiving, from a data channel (DC) application server (AS) entity, a first message for subscribing to an event associated with DC interworking of a multimedia telephony service for IMS (MTSI) user equipment (UE);
based on INVITE information received from the MTSI UE, identifying occurrence of the event; and
transmitting, to the DC AS entity, a second message for notifying the DC interworking for a DC MTSI UE.

6. The method of claim 5,
wherein the first message comprises user identifiers (IDs) associated with the DC MTSI UE, and
wherein the second message comprises a user ID associated with the DC MTSI UE, corresponding to the DC interworking of the MTSI UE, among the user IDs associated with the DC MTSI UE.

7. The method of claim 5,
wherein the first message is received through a network exposure function (NEF) entity, and
wherein the second message is transmitted through the NEF entity.

8. The method of claim 5, comprising:
receiving, from the DC AS entity, a third message comprising information for accessing a DC AS; and
transmitting, to the MTSI UE, a fourth message comprising the information for accessing the DC AS.

9. A data channel (DC) application server (AS) entity in a mobile communication system, the DC AS entity comprising:
a transceiver; and
a controller coupled to the transceiver,
wherein the controller is configured to:
transmit, to an Internet protocol (IP) multimedia subsystem (IMS) application server (AS) entity, a first message for subscribing to an event associated with DC interworking of a multimedia telephony service for IMS (MTSI) user equipment (UE);
receive, from the IMS AS entity, a second message for notifying the DC interworking for a DC MTSI UE; and
transmit, to the MTSI UE, information for accessing a DC AS.

10. The DC AS entity of claim 9,
wherein the first message comprises user identifiers (IDs) associated with the DC MTSI UE, and
wherein the second message comprises a user ID associated with the DC MTSI UE, corresponding to the DC interworking of the MTSI UE, among the user IDs associated with the DC MTSI UE.

11. The DC AS entity of claim 9,
wherein the first message is transmitted through a network exposure function (NEF) entity, and
wherein the second message is received through the NEF entity.

12. The DC AS entity of claim 9, wherein the information for accessing the DC AS is transmitted to the MTSI UE through the IMS AS entity.

13. An Internet protocol (IP) multimedia subsystem (IMS) application server (AS) entity in a mobile communication system, the IMS AS entity comprising:
a transceiver; and
a controller coupled to the transceiver,
wherein the controller is configured to:
receive, from a data channel (DC) application server (AS) entity, a first message for subscribing to an event associated with DC interworking of a multimedia telephony service for IMS (MTSI) user equipment (UE);
based on INVITE information received from the MTSI UE, identify occurrence of the event; and
transmit, to the DC AS entity, a second message for notifying the DC interworking for a DC MTSI UE.

14. The IMS AS entity of claim 13,
wherein the first message comprises user identifiers (IDs) associated with the DC MTSI UE, and
wherein the second message comprises a user ID associated with the DC MTSI UE, corresponding to the DC interworking of the MTSI UE, among the user IDs associated with the DC MTSI UE.

15. The IMS AS entity of claim 13,
wherein the first message is received through a network exposure function (NEF) entity, and
wherein the second message is transmitted through the NEF entity.
